(19) **Europäisches Patentamt European Patent Office Office européen des brevets**

(11) **EP 4 714 673 A1**

(12) **EUROPEAN PATENT APPLICATION**

(43) Date of publication:
**25.03.2026 Bulletin 2026/13**

(21) Application number: **24201973.5**

(22) Date of filing: **23.09.2024**

(51) International Patent Classification (IPC):
**B60C 9/08** (2006.01)    **B60C 15/024** (2006.01)

(52) Cooperative Patent Classification (CPC):
**B60C 9/08; B60C 15/024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nokian Renkaat Oyj**
**37101 Nokia (FI)**

(72) Inventors:
 • **DAMM, Dietmar**
   **80538 München (DE)**

 • **LEPISTÖ, Samu**
   **37101 Nokia (FI)**
 • **RÖYTIÖ, Jarno**
   **37101 Nokia (FI)**
 • **SGRO, Stefano**
   **37101 Nokia (FI)**
 • **JUNTTILA, Joonas**
   **37101 Nokia (FI)**
 • **VIHAVAINEN, Arttu**
   **33470 Ylöjärvi (FI)**

(74) Representative: **Berggren Oy**
**P.O. Box 16**
**Fabianinkatu 21**
**00101 Helsinki (FI)**

(54) **RADIAL TYRE**

(57)    The radial tyre (10) for a passenger car or SUV is configured to be mounted onto a rim (30) having a nominal diameter in the range of 13 to 24 inches and the bead diameter (DH) of the bead region (1) of the tyre (10) is 1.6-2.4 mm smaller than the rim diameter (D) specified for the corresponding rim size in the ETRTO standard for rims of passenger cars, LCVs and trailers.

FIG. 6

EP 4 714 673 A1

## Description

Technical field of the invention

The invention concerns a radial tyre for a passenger car or SUV, as defined in claim 1.

Background of the invention

Passenger cars, light commercial vehicles, SUVs and other similar vehicles are usually provided with pneumatic radial tyres. As the tyres provide the only contact points between the vehicle and the ground, the properties of the tyres play a crucial role in the performance, handling properties and safety of vehicles. The tyres must allow safe and comfortable driving in various conditions and situations. For instance, the tyres must function both in dry and wet weather, in various temperatures and on different surfaces and at different speeds. Improving of a single property of a tyre could be relatively easy, but improving of the overall performance of a tyre is very challenging due to many conflicting requirements.

The parts of the outer surface of a typical radial tyre include a tread, sidewalls and bead areas. The bead areas contact the rim, and the design and construction of the bead areas has a significant effect on the properties of the tyre.

Summary of the invention

An object of the invention is to provide an improved radial tyre for a passenger car or SUV.

The tyre according to the invention is configured to be mounted onto a rim having a nominal diameter in the range of 13 to 24 inches. The bead diameter of the bead region of the tyre is 1.6-2.4 mm smaller than the rim diameter specified for the corresponding rim size in the ETRTO standard for rims of passenger cars, LCVs and trailers.

The tyre according to the invention stays firmly on the rim and has improved handling properties on dry, wet and snowy roads.

According to an embodiment of the invention, the bead diameter is 1.8-2.2 mm smaller than said rim diameter.

According to an embodiment of the invention, the ratio between the diameter of a seam between the bead region and the sidewall of the tyre and said bead diameter is

$$a_{min} \times D^2 + b_{min} \times D + c_{min} \leq \frac{DS}{DH} \leq a_{max} \times D^2 + b_{max} \times D + c_{max},$$

where D is said rim diameter, DS is said diameter of the seam and DH is said beam diameter, and

$$a_{min} = 4.237 \cdot 10^{-7} \text{ mm}^{-2}$$

$$b_{min} = -5.944 \cdot 10^{-4} \text{ mm}^{-1}$$

$c_{min} = 1.272$

$$a_{max} = 4.769 \cdot 10^{-7} \text{ mm}^{-2}$$

$$b_{max} = -6.686 \cdot 10^{-4} \text{ mm}^{-1}$$

$c_{max} = 1.305.$

With the ratio defined above, the handling properties of the tyre are further improved and the tyre gets good support from the side surface in extreme situations. The dimensioning also facilitates mounting of the tyre.

According to an embodiment of the invention, the constants and coefficients in the formula above are

$$a_{min} = 4.264 \cdot 10^{-7} \text{ mm}^{-2}$$

$$b_{min} = -5.981 \cdot 10^{-4} \text{ mm}^{-1}$$

$C_{min} = 1.273$

$$a_{max} = 4.741 \cdot 10^{-7} \text{ mm}^{-2}$$

$$b_{max} = -6.648 \cdot 10^{-4} \text{ mm}^{-1}$$

$c_{max} = 1.303$.

According to an embodiment of the invention, the sidewall of the tyre is provided with a protrusion forming a rim protector located radially outwards from a seam between the bead region and the sidewall of the tyre.

According to an embodiment of the invention, the rim protector comprises a tip having an inner edge and an outer edge, the inner edge being located closer to the rotation axis of the tyre than the outer edge, and the lateral distance from a laterally outwards facing rim contact area of the bead region of the tyre to said inner edge of the tip of the rim protector is 13.5-20.0 mm. According to an embodiment of the invention, the lateral distance is 15.5-18.0 mm. The dimensions facilitate mounting of the tyre.

According to an embodiment of the invention, the ratio between the diameter of the circumference where an inner edge of a tip of the rim protector is located and the bead diameter is

$$d_{min} \times D^2 + e_{min} \times D + f_{min} \leq \frac{DP}{DH} \leq d_{max} \times D^2 + e_{max} \times D + f_{max},$$

where D is said rim diameter, DP is said diameter of the circumference, DH is said bead diameter, and

$$d_{min} = 4.912 \cdot 10^{-7} \text{ mm}^{-2}$$

$$e_{min} = -6.890 \cdot 10^{-4} \text{ mm}^{-1}$$

$f_{min} = 1.315$

$$d_{max} = 6.507 \cdot 10^{-7} \text{ mm}^{-2}$$

$$e_{max} = -9.122 \cdot 10^{-4} \text{ mm}^{-1}$$

$f_{max} = 1.416$.

According to an embodiment of the invention, the constants and coefficients in the formula above are

$$d_{min} = 5.362 \cdot 10^{-7} \text{ mm}^{-2}$$

$$e_{min} = -7.520 \cdot 10^{-4} \text{ mm}^{-1}$$

$f_{min} = 1.343$

$$d_{max} = 6.054 \cdot 10^{-7} \text{ mm}^{-2}$$

$$e_{max} = -8.488 \cdot 10^{-4} \text{ mm}^{-1}$$

$f_{max} = 1.387$.

According to an embodiment of the invention, the angle between the bead region and the sidewall of the tyre at the seam of the bead region and the sidewall is at most 180 degrees. According to an embodiment of the invention, the angle is at least 170 degrees. With the angles defined above, the handling properties of the tyre are further improved and the side surface provides good support in extreme situations.

According to an embodiment of the invention, the bead width from the toe of the bead region of the tyre to a laterally outwards facing rim contact area of the bead region is 14.8-16.2 mm. According to an embodiment of the invention, the bead width is 14.8-15.2 mm in case the tyre comprises a single carcass ply and 15.8-16.2 mm in case the tyre comprises two carcass plies. The dimensioning increases the compression force of the tyre on the rim and ensures that the tyre stays firmly on the rim.

Brief description of the drawings

Embodiments of the invention are described below in more detail with reference to the accompanying drawings, in which

Fig. 1 shows an example of a radial tyre,
Fig. 2 shows a cross-sectional view of components of a radial tyre,
Fig. 3 shows an enlarged view of part of the tyre of figure 2,
Fig. 4 shows an example of a rim profile,
Fig. 5 shows a schematic view of a tyre mounted onto a rim, and
Fig. 6 shows the bead region and a lower part of the sidewall of a tyre according to an embodiment of the invention.

Detailed description of embodiments of the invention

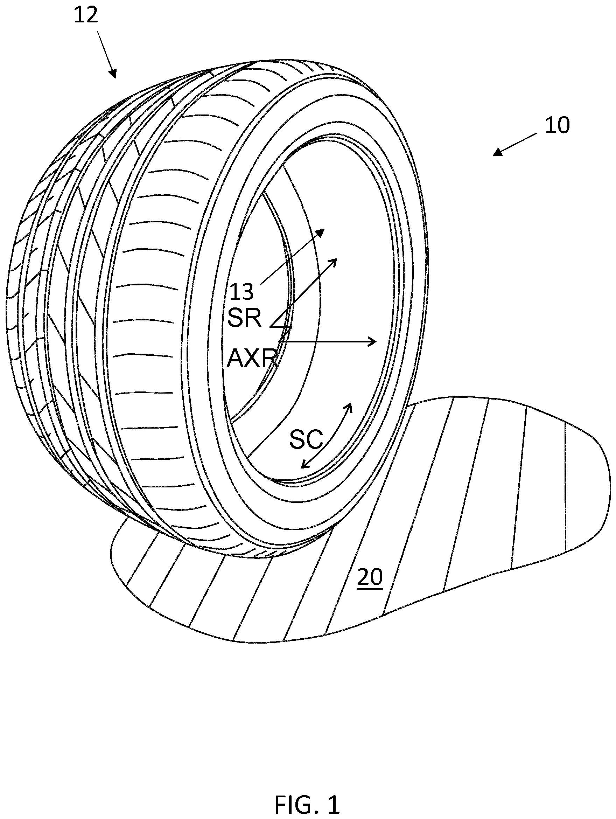

Figure 1 shows an example of a radial tyre 10. The tyre 10 is a pneumatic tyre for a passenger car or a SUV, although the tyre 10 could also be used in other vehicles. The tyre 10 is configured to be mounted onto a rim having a nominal diameter in the range of 13 to 24 inches.

The tyre 10 is configured to be rotatable around an axis of rotation AXR. Arrow SR in figure 1 denotes the radial direction of the tyre 10 and arrow SC denotes the circumferential direction of the tyre 10.

The tyre 10 comprises a tread 12, which is configured to be in contact with a surface 20, such as a road surface, during the normal use of the tyre 10. The tread 12 comprises a tread pattern, which comprises a plurality of tread blocks. The tyre 10 has an inner surface 13, which faces inwards and is therefore not visible during the normal use of the tyre 10 when the tyre 10 is mounted onto a rim.

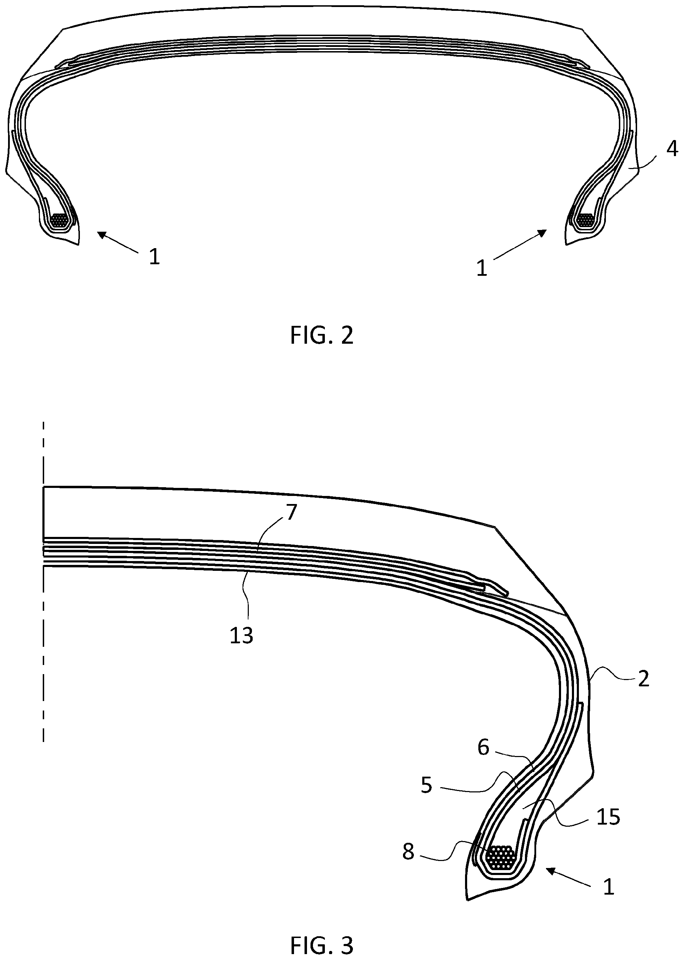

Figure 2 shows as a cross-sectional view an example of typical components of a radial tyre 10. Figure 3 shows an enlarged view of part of the tyre 10 to better illustrate the components of the tyre 10. It should be noted that different tyres 10 may comprise different components. A radial tyre 10 can thus comprise even other components than those shown in the figures, and/or not all tyres 10 comprise all the components described below. The tread 12 of the tyre 10 is not shown in figures 2 and 3.

The tyre 10 comprises a bead 1 on each side of the tyre 10. The term "bead" refers to the area that is configured to contact a rim when the tyre 10 is mounted onto the rim. Each bead 1 extends in the circumferential direction over a whole circle. The bead 1 has a toe that faces in the lateral direction of the tyre 10 towards an imaginary centre plane of the tyre 10 and a heel that faces laterally outwards from the centre plane of the tyre 10. Many components of the tyre 10 extend to one or both of the bead regions of the tyre 10.

The tyre 10 typically comprises at least one reinforcing belt, i.e., a circumferential layer 7, which is arranged between the inner surface 13 of the tyre 10 and the tread 12 of the tyre. In the example of figures 2 and 3, the tyre 10 comprises two belts 7. The belts 7 can be made of the same material or of different materials.

The circumferential belts 7 can comprise metal. The circumferential belts 7 may comprise steel, or they may consist of steel. The circumferential belts 7 may be wire-like structures arranged inside the tyre 10. At least one of the circumferential belts 7 may comprise a steel mesh. In addition, or alternatively, the circumferential belts 7 may comprise fibrous material. The fibrous material of a circumferential belt 7 may comprise at least one of cotton, rayon, polyamide (Nylon), polyester, polyethylene terephthalate, and poly-paraphenylene terephthalamide (Kevlar). The tyre 10 could comprise, for instance, two steel belts and one or more belts made of a fibrous material and arranged radially outwards from the steel belts.

The body of the tyre 10 comprises at least one carcass ply 5, 6. In the example of figures 2 and 3, the tyre 10 comprises two carcass plies 5, 6. The carcass plies are material layers, typically textile layers. Each carcass ply 5, 6 extends from a first bead region of the tyre 10 to a second bead region on the other side of the tyre 10. Each ply fabric can be made of e.g. polyester. The plies can be coated with rubber to seal the tyre and to bond the layers with each other.

The carcass ply/plies 5, 6 may comprise fibrous material. The fibrous material of the carcass ply 5, 6 can comprise

- cotton, and/or
- rayon, and/or
- polyamide (Nylon), and/or
- polyester, and/or
- polyethylene terephthalate, and/or
- Poly-paraphenylene terephthalamide (Kevlar).

The tyre 10 further comprises an outer sidewall 2. The outer sidewall 2 of the tyre 10 can be used to protect the side of the tyre e.g. from the road. The outer visible tyre sidewalls 2 can be of a rubber composition.

The tyre 10 may further comprise an inner liner 13, which inner liner 13 of the tyre is typically an airtight layer of rubber.

Each bead 1 of the tyre 10 is configured to allow the tyre 10 to be mounted onto a rim. The bead 1 comprises a rubber composition that forms a mounting surface of the tyre 10. The bead 1 further comprises a bead core (bead wire) 8 and an apex (bead filler) 15. The bead core 8 is formed by a wire bundle. The bead core 8 can be constructed by wrapping a single strand of rubber-coated bead wire into a bundle. The bead core 8 can have a substantially circular cross-sectional shape or some other shape, such as a drop shape. The apex 15 may be a filler of elastomeric material.

The carcass plies 5, 6 extend from one side of the tyre 10 to the other side and the carcass plies 5, 6 are turned around the bead core 8 and at least part of the apex to the external side of the tyre 10. In the examples of the figures, the outer carcass ply 6 extends farther from the bead core 8.

To manufacture a tyre, a pre-formed apex 15 can be connected to the bead core 8 with a machine. Thus, a bead assembly can be preassembled from the bead core 8 and the apex 15. The apex 15 can be, for example, an extruded strip. The tyre 10 can be pre-formed, and the assembly can be combined to a tyre carcass. Finally, the tyre 10 can be vulcanized, e.g., in a curing press.

A method for manufacturing a pneumatic tyre can thus comprise the following steps:

- connecting a preformed apex to a bead core, thereby forming an assembly comprising the bead core and the apex,
- preforming a tyre comprising said assembly, and
- vulcanizing the preformed tyre, thereby obtaining the tyre.

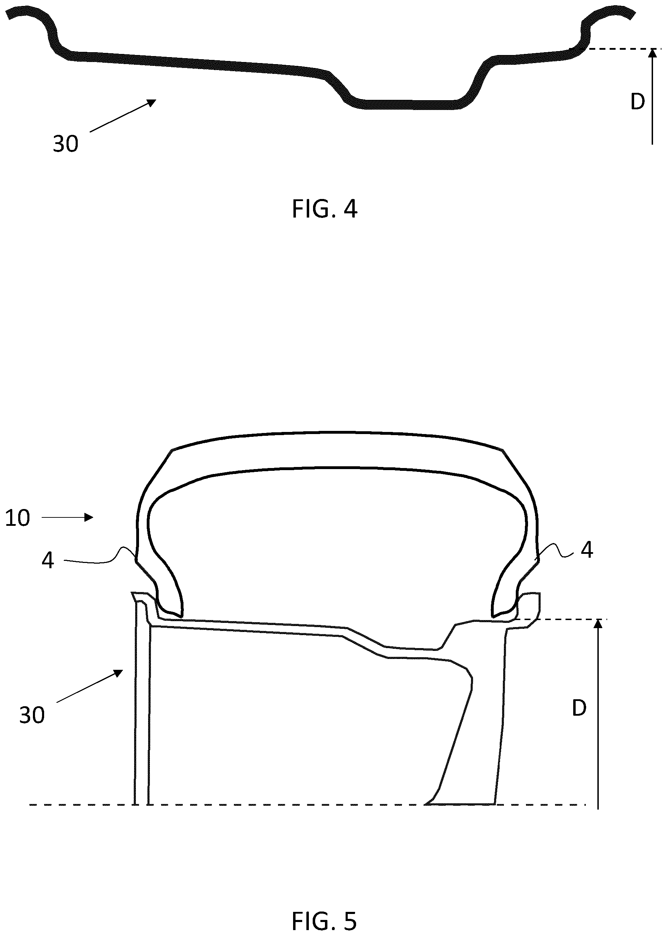

Figure 4 shows an example of a profile of a rim 30. The dimensions of rims are standardised by the standards of the European Tyre & Rim Technical Organisation (ETRTO). The rims of passenger car tyres are covered by a standard covering rims for passenger cars, light commercial vehicles and trailers. Many dimensions of the rims are specified in the standard as minimum and/or maximum dimensions. One dimension specified in the standard is the rim diameter D. Each rim has a nominal size expressed in inches. The nominal sizes vary from 10 to 30 inches. For each nominal size, there is a specific rim diameter D. The rim diameter D is measured from a position where the heel of the tyre 10 contacts the rim 30. As an example, the rim diameter D of a common wheel size 17 inches is 436.6 mm.

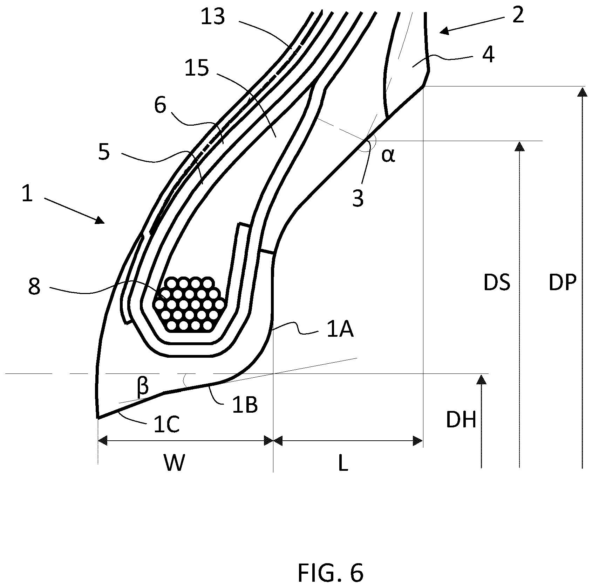

The dimensioning of the tyre 10 according to the present invention is described by referring to figure 6. The tyre 10 according to the invention has a bead diameter DH. The bead diameter DH of the tyre 10 is the diameter of the bead 1 at a position where the heel of the tyre 10 is configured to contact the rim 30. According to the invention, the bead diameter DH is 1.6-2.4 mm smaller than the rim diameter D specified for the corresponding rim size in the ETRTO standard for rims of passenger cars, LCVs and trailers.

The tyre according to the invention stays firmly on the rim and has improved handling properties on dry, wet and snowy roads.

According to an embodiment of the invention, the bead diameter DH is 1.8-2.2 mm smaller than the rim diameter D.

More specifically, the bead diameter DH can be defined as the diameter of a circle on which an imaginary extension of an ankle portion that is perpendicular to the rotation axis of the tyre and an imaginary extension of an outer portion of the bead base of the tyre intersect.

Figure 6 shows part of a tyre 10 according to an embodiment of the invention in a use position. The bead region 1 of the tyre 10 has a bead base (sole) that extends from the toe to the heel of the tyre. The bead base comprises an outer portion 1B and an inner portion 1C. The outer portion 1B is located laterally farther from an imaginary centre plane of the tyre 10 than the inner portion 1C. The centre plane means here a plane that is perpendicular to the rotation axis AXR of the tyre 10. In a cross-sectional view each of the outer portion 1B and the inner portion 1C of the bead base is straight.

The angle $\beta$ between the outer portion 1B of the bead base and a line that is parallel to the rotation axis AXR of the tyre 10 can be referred to as a first toe angle. In the embodiment of figure 6, the first toe angle $\beta$ is 10 degrees. The angle between the inner portion 1C and a line that is parallel to the rotation axis AXR of the tyre 10 can be referred to as a second toe angle. In the embodiment of figure 6, the second toe angle is greater than the first toe angle $\beta$. The bead region 1 has a laterally outwards facing rim contact area 1A, where the bead 1 of a mounted tyre is in contact with the rim 30. The rim contact area 1A has a portion that is perpendicular to the rotation axis AXR of the tyre 10. The bead diameter DH is the diameter of the circle where the imaginary extensions of the outer portion 1B of the bead base and the rim contact area 1A intersect.

The side walls 2 of the tyre 10 are typically manufactured as separate extruded parts that are pressed onto the body of the tyre 10 during assembly of the tyre 10. Each side wall 2 of the tyre 10 connects to the bead region 1 at a seam 3, which extends circumferentially around the whole tyre 10. The seam 3 has a diameter DS. According to an embodiment of the invention, the seam 3 is positioned such that the ratio DS/DH is within the range defined by the following formula:

$$a_{min} \times D^2 + b_{min} \times D + c_{min} \leq \frac{DS}{DH} \leq a_{max} \times D^2 + b_{max} \times D + c_{max},$$

where D is said rim diameter, and

$$a_{min} = 4.237 \cdot 10^{-7} \text{ mm}^{-2}$$

$$b_{min} = -5.944 \cdot 10^{-4} \text{ mm}^{-1}$$

$$C_{min} = 1.272$$

$$a_{max} = 4.769 \cdot 10^{-7} \text{ mm}^{-2}$$

$$b_{max} = -6.686 \cdot 10^{-4} \text{ mm}^{-1}$$

$$c_{max} = 1.305.$$

Preferably, the coefficients and constants in the formula defined above are

$$a_{min} = 4.264 \cdot 10^{-7} \text{ mm}^{-2}$$

$$b_{min} = -5.981 \cdot 10^{-4} \text{ mm}^{-1}$$

$$C_{min} = 1.273$$

$$a_{max} = 4.741 \cdot 10^{-7} \text{ mm}^{-2}$$

$$b_{max} = -6.648 \cdot 10^{-4} \text{ mm}^{-1}$$

$$c_{max} = 1.303.$$

In the embodiment of figure 6, the sidewall 2 of the tyre 10 is provided with a protrusion 4 that forms a rim protector located radially outwards from the seam 3 between the bead region 1 and the sidewall 2 of the tyre 10. The rim protector 4 protects the rim 30 from external impacts.

In the embodiment of figure 6, the rim protector 4 comprises a tip having an inner edge and an outer edge. The inner edge refers here to the edge that is located closer to the rotation axis AXR of the tyre 10 than the outer edge. In the embodiment of figure 6, the laterally outermost point of the rim protector 4 is located on the outer edge of the tip of the rim protector 4.

The tyre 10 is preferably configured such that the lateral distance L from the rim contact area 1A of the bead region 1 of the tyre 10 to the inner edge of the tip of the rim protector 4 is 13.5-20.0 mm. More preferably, the lateral distance L is 15.5-18.0 mm.

The rim protector 4 has a circumference where the inner edge of the tip of the rim protector 4 is located. The diameter of the circumference is DP. According to an embodiment of the invention, the rim protector 4 is positioned such that the ratio DP/DH between the diameter of said circumference and the bead diameter is within the range defined by the following formula:

$$d_{min} \times D^2 + e_{min} \times D + f_{min} \leq \frac{DP}{DH} \leq d_{max} \times D^2 + e_{max} \times D + f_{max},$$

where D is said rim diameter, and

$$d_{min} = 4.912 \cdot 10^{-7} \text{ mm}^{-2}$$

$$e_{min} = -6.890 \cdot 10^{-4} \text{ mm}^{-1}$$

$f_{min} = 1.315$

$$d_{max} = 6.507 \cdot 10^{-7} \text{ mm}^{-2}$$

$$e_{max} = -9.122 \cdot 10^{-4} \text{ mm}^{-1}$$

$f_{max} = 1.416$.

Preferably, the coefficients and constants in the formula defined above are

$$d_{min} = 5.362 \cdot 10^{-7} \text{ mm}^{-2}$$

$$e_{min} = -7.520 \cdot 10^{-4} \text{ mm}^{-1}$$

$f_{min} = 1.343$

$$d_{max} = 6.054 \cdot 10^{-7} \text{ mm}^{-2}$$

$$e_{max} = -8.488 \cdot 10^{-4} \text{ mm}^{-1}$$

$f_{max} = 1.387$.

According to an embodiment of the invention, the angle $\alpha$ between the bead region 1 and the sidewall 2 of the tyre 10 at the seam 3 of the bead region 1 and the sidewall 1 is at most 180 degrees. Preferably, the angle is at least 170 degrees.

The bead 1 of the tyre 10 has a width W from the toe of the bead region 1 to the laterally outwards facing rim contact area 1A of the bead region. According to an embodiment of the invention, the width W is 14.8-16.2 mm. The width may be selected based on whether the tyre 10 is provided with a single carcass ply or with two carcass plies 5, 6, as in the embodiments of the figures. If the tyre 10 comprises a single carcass ply, the width W could be 14.8-15.2 mm and if the tyre 10 comprises two carcass plies 5, 6, the width W could be 15.8-16.2 mm.

The table below shows test result of a tyre according to an embodiment of the invention compared to a tyre having otherwise similar construction but not having the bead features according to the present invention.

|  | Comparative example | Tyre according to the invention |
|---|---|---|
| Dry handling performance index | 100 | 103 |
| Wet handling performance index | 100 | 101 |
| Snow handling performance index | 100 | 102 |

Various properties of the tyre according to the invention were tested on dry, wet and snowy surfaces. Similar tests were conducted for the reference tyre forming the comparative example. The reference tyre was given a performance index 100 for each of dry handling, wet handling and snow handling properties. By comparing the test results of the tyre according to the invention to the corresponding test results of the reference tyre, performance indexes were calculated for the tyre according to the invention. As shown in the table above, all the performance indexes show improved performance. In particular, the performance of the tyre in dry conditions was improved.

**Claims**

1. A radial tyre (10) for a passenger car or SUV, the tyre (10) being configured to be mounted onto a rim (30) having a nominal diameter in the range of 13 to 24 inches, **characterized in that** the bead diameter (DH) of the bead region (1) of the tyre (10) is 1.6-2.4 mm smaller than the rim diameter (D) specified for the corresponding rim size in the ETRTO standard for rims of passenger cars, LCVs and trailers.

2. The tyre (10) according to claim 1, wherein the bead diameter (DH) is 1.8-2.2 mm smaller than said rim diameter (D).

3. The tyre (10) according to claim 1 or 2, wherein the ratio DS/DH between the diameter (DS) of a seam (3) between the bead region (1) and the sidewall (2) of the tyre (10) and said bead diameter (DH) is

$$a_{min} \times D^2 + b_{min} \times D + c_{min} \leq \frac{DS}{DH} \leq a_{max} \times D^2 + b_{max} \times D + c_{max},$$

where D is said rim diameter, and

$$a_{min} = 4.237 \cdot 10^{-7} \text{ mm}^{-2}$$

$$b_{min} = -5.944 \cdot 10^{-4} \text{ mm}^{-1}$$

$c_{min} = 1.272$

$$a_{max} = 4.769 \cdot 10^{-7} \text{ mm}^{-2}$$

$$b_{max} = -6.686 \cdot 10^{-4} \text{ mm}^{-1}$$

$c_{max} = 1.305.$

4. The tyre (10) according to claim 3, wherein

$$a_{min} = 4.264 \cdot 10^{-7} \text{ mm}^{-2}$$

$$b_{min} = -5.981 \cdot 10^{-4} \text{ mm}^{-1}$$

$c_{min} = 1.273$

$$a_{max} = 4.741 \cdot 10^{-7} \text{ mm}^{-2}$$

$$b_{max} = -6.648 \cdot 10^{-4} \text{ mm}^{-1}$$

$c_{max} = 1.303.$

5. The tyre (10) according to any of the preceding claims, wherein the sidewall (2) of the tyre (10) is provided with a protrusion (4) forming a rim protector located radially outwards from a seam (3) between the bead region (1) and the sidewall (2) of the tyre (10).

6. The tyre (10) according to claim 5, wherein the rim protector (4) comprises a tip having an inner edge and an outer edge, the inner edge being located closer to the rotation axis (AXR) of the tyre (10) than the outer edge, and the lateral distance (L) from a laterally outwards facing rim contact area (1A) of the bead region (1) of the tyre (10) to said inner edge of the tip of the rim protector (4) is 13.5-20.0 mm.

7. The tyre (10) according to claim 6, wherein said lateral distance (L) is 15.5-18.0 mm.

8. The tyre (10) according to any of claims 5-7, wherein the ratio DP/DH between the diameter (DP) of the circumference where an inner edge of a tip of the rim protector (4) is located and the bead diameter (DH) is

$$d_{min} \times D^2 + e_{min} \times D + f_{min} \leq \frac{DP}{DH} \leq d_{max} \times D^2 + e_{max} \times D + f_{max},$$

where D is said rim diameter, and

$$d_{min} = 4.912 \cdot 10^{-7} \text{ mm}^{-2}$$
$$e_{min} = -6.890 \cdot 10^{-4} \text{ mm}^{-1}$$

$$f_{min} = 1.315$$

$$d_{max} = 6.507 \cdot 10^{-7} \text{ mm}^{-2}$$
$$e_{max} = -9.122 \cdot 10^{-4} \text{ mm}^{-1}$$

$$f_{max} = 1.416.$$

9. The tyre (10) according to claim 8, wherein

$$d_{min} = 5.362 \cdot 10^{-7} \text{ mm}^{-2}$$
$$e_{min} = -7.520 \cdot 10^{-4} \text{ mm}^{-1}$$

$$f_{min} = 1.343$$

$$d_{max} = 6.054 \cdot 10^{-7} \text{ mm}^{-2}$$
$$e_{max} = -8.488 \cdot 10^{-4} \text{ mm}^{-1}$$

$$f_{max} = 1.387.$$

10. The tyre (10) according to any of claims 5-9, wherein the angle ($\alpha$) between the bead region (1) and the sidewall (2) of the tyre (10) at the seam (3) of the bead region (1) and the sidewall (2) is at most 180 degrees.

11. The tyre (10) according claim 10, wherein the angle ($\alpha$) between the bead region (1) and the sidewall (2) is at least 170 degrees.

12. The tyre (10) according to any of the preceding claims, wherein the bead width (W) from the toe of the bead region (1) of the tyre (10) to a laterally outwards facing rim contact area (1A) of the bead region (1) is 14.8-16.2 mm.

13. The tyre (10) according to claim 12, wherein said bead width (W) is 14.8-15.2 mm in case the tyre (10) comprises a single carcass ply (5, 6) and 15.8-16.2 mm in case the tyre (10) comprises two carcass plies (5, 6).

FIG. 1

FIG. 2

FIG. 3

30

FIG. 4

10

4

4

30

D

FIG. 5

FIG. 6

EUROPEAN SEARCH REPORT

Application Number

EP 24 20 1973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 109 068 B1 (BRIDGESTONE CORP [JP]) 10 July 2019 (2019-07-10) | 1,2 | INV. B60C9/08 B60C15/024 |
| A | * paragraphs [0042], [0056]; figures 1, 2 * | 3-13 | |
| | ----- | | |
| X | EP 0 531 007 B1 (BRIDGESTONE CORP [JP]) 13 November 1996 (1996-11-13) | 1,2 | |
| A | * page 3, lines 49-57; claims 1, 2; figures 1, 2; table 1 * | 3-13 | |
| | ----- | | |
| X | CN 106 739 843 A (ANHUI GITI RADIAL TIRE CO LTD) 31 May 2017 (2017-05-31) | 1,2 | |
| A | * paragraph [0031]; claim 1; figures 1, 4 * | 3-13 | |
| | ----- | | |
| A | JP 2004 359042 A (TOYO TIRE & RUBBER CO) 24 December 2004 (2004-12-24) * paragraph [0025]; figures 1, 2 * | 1-13 | |
| | ----- | | |

**TECHNICAL FIELDS SEARCHED (IPC)**

B60C

The present search report has been drawn up for all claims

| Place of search | Date of completion of the search | Examiner |
|---|---|---|
| Munich | 17 February 2025 | Balázs, Matthias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 1973

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2025

| Patent document cited in search report | | Publication date | Patent family member(s) | | Publication date |
|---|---|---|---|---|---|
| EP 3109068 | B1 | 10-07-2019 | CN | 106029405 A | 12-10-2016 |
| | | | EP | 3109068 A1 | 28-12-2016 |
| | | | JP | 6317130 B2 | 25-04-2018 |
| | | | JP | 2015155263 A | 27-08-2015 |
| | | | US | 2017057300 A1 | 02-03-2017 |
| | | | WO | 2015125387 A1 | 27-08-2015 |
| EP 0531007 | B1 | 13-11-1996 | DE | 69215170 T2 | 24-04-1997 |
| | | | EP | 0531007 A1 | 10-03-1993 |
| | | | ES | 2096725 T3 | 16-03-1997 |
| | | | JP | H0558120 A | 09-03-1993 |
| CN 106739843 | A | 31-05-2017 | NONE | | |
| JP 2004359042 | A | 24-12-2004 | JP | 4361318 B2 | 11-11-2009 |
| | | | JP | 2004359042 A | 24-12-2004 |

EPO FORM P0459